# EUROPEAN PATENT SPECIFICATION

(11) **EP 2 079 799 B1**
(45) Date of publication and mention of the grant of the patent: **07.01.2015**
(21) Application number: 07854551.4
(22) Date of filing: 01.11.2007
(51) Int. Cl.: C08G 18/48, C08G 18/00, C08G 18/66, C08G 18/75, C08F 283/00

(54) **SELF-CATALYZING POLYURETHANES**
SELBSTKATALYSIERENDE POLYURETHANE
POLYURÉTHANNES AUTOCATALYSEURS

(30) Priority: 09.11.2006 US 595216
(43) Date of publication of application: 22.07.2009
(73) Proprietor: Sun Chemical Corporation, Parsippany, NJ 07054 (US)
(72) Inventor: CZARNECKI, Richard, Wayne, NJ 07470 (US); ARCURIO, Ralph, Bridgewater, NJ 08807 (US); WILSON, William, Hawthorne, NJ 07506 (US)
(74) Representative: Denness, James Edward
(86) International application number: PCT/US2007/083281
(87) International publication number: WO 2008/060862

(56) References cited:
- JP-A- 1 121 259
- JP-A- 61 126 124
- US-A- 3 591 561
- US-A- 3 591 561
- US-A- 3 880 781
- US-A- 4 373 057
- US-A- 4 731 392
- US-A- 4 870 129
- US-A- 4 870 129

## Description

### FIELD OF THE INVENTION

The invention relates to a method of preparing a solvent based polyurethane resin in the absence of an independent catalyst.

### BACKGROUND OF THE INVENTION

In the production of polyurethane resins, the reaction between a diisocyanate and a polyol is usually slow and a catalyst is used to accelerate the reaction rate. However, conventional catalysts are normally not removed from the final polymer and can present sensory or health hazards when used in sensitive end applications. It is desirable to identify an alternate route to minimize the reaction cycle time whilst avoiding the potential end use problems of conventional catalysts.

Typical catalysts used to accelerate the reaction of isocyanates and polyols include compounds of tin (dibutyltin dilaurate, dibutyltin oxide), tertiary amines. These catalysts are typically not removed from the final product, and remain present in the polymer as a free substance. As such, they are available to migrate or leach out of applied coatings, and can present health or odor hazards in certain end use applications (e.g., food packaging).

In the synthesis of water dispersible polyurethanes and polyurethane-ureas, the use of isocyanate-reactive carboxylic functional compounds in the prepolymer provides pendant carboxylic acid functionality which can later be neutralized with alkali to enable the dispersion of the polymer into water. Common examples of these compounds include dimethylolpropionic acid and dimethylolbutanoic acid. In the synthesis of solvent based (non-water dispersible) polyurethanes and polyurethane-ureas (i.e., polymers dissolved in organic solvents), these compounds are typically not used as there is no need for such a stabilization mechanism in the absence of water.

US 4,373,057 discloses the production of a polyurethane resin by reacting a diisocyanate with a diol or a polyol in the absence of a polymerization catalyst. US3880781 discloses a process for production of polyurethane from polyethers, organic isocyanates and water with and without catalysts. US4870129 discloses adhesives consisting of aqueous solutions or dispersions of polyurethanes produced by reaction of diisocyanate with polyhydric alcohols.

### SUMMARY OF THE INVENTION

The present invention provides a method of preparing an organic solvent based polyurethane resin comprising reacting at least one diisocyanate compound with at least two isocyanate reactive compounds wherein:
(a)at least one of said isocyanate reactive compounds comprises at least one isocyanate reactive group and a carboxylic acid functional group; and
(b)said reaction is carried out in the absence of an independent catalyst.

Other objects and advantages of the present invention will become apparent from the following description and appended claims.

### DETAILED DESCRIPTION OF THE INVENTION

It has been surprisingly discovered that the use of isocyanate-reactive carboxylic acid functional compounds provides a self-catalyzing effect when incorporated into polyurethane and polyurethane-urea polymers. The catalytic effect is seen at both low (for example such as 0.05 equivalents) and high levels of incorporation into the polymer. The use of these compounds has been shown to significantly reduce reaction cycle time (vs. identical reactions without the use of such compounds).

Thus, the present invention is related to a solvent based polyurethane resin which is obtainable by reacting a mixture of aliphatic diisocyanate(s) and/or aromatic diisocyanate(s) with a group of isocyanate-reactive compounds, including at least one isocyanate-reactive compound containing at least one carboxylic acid functional group.

The term "aliphatic diisocyanate" is to be understood as to comprise straight-chain aliphatic, branched aliphatic as well as cycloaliphatic diisocyanates. Preferably, the diisocyanate comprises 1 to 10 carbon atoms. Examples of preferred diisocyanates are, 1,4-diisocyanatobutane, 1,6-diisocyanatohexane, 1,5-diisocyanato-2,2-dimethylpentane, 4-trimethyl-1,6-diisocyanatohexane, 1,10-diisocyanatodecane, 1,3- and 1,4-diisocyanatocyclo-hexane, 1-isocyanato-5-isocyanatomethyl-3,3,5-trimethylcyclohexane (isophorone diisocyanate (IPDI)), 2,3- 2, 4- and 2,6-diisocyanato-1-methylcyclohexane, 4,4'-and 2,4'-diisocyanatodicyclohexylmethane, 1-isocyanato-3-(4)-isocyanatomethyl-l-methyl-cyclohexane, 4,4'- and 2,4'-diisocyanatodiphenylmethane, and mixtures thereof, or 2,2,4- or 2,4,4 trimethyldiisocyanatohexane (TMDI).

The term "aromatic diisocyanate" is to be understood as to compromise straight-chain aromatic, branched aromatic as well as cycloaromatic diisocyanates. Preferably, the diisocyanate comprises 1 to 10 carbon atoms. Examples of preferred diisocyanates are 1,1'-methylenebis[4-isocyanato-benzene (MDI), 1,6-diisocyanato-hexane (HDI), and 1,3-diisocyanatomethyl-benzene (TDI).

Isocyanate reactive compounds include and are not limited to mono, di, and multifunctional alcohols, as well as mono, di, and multifunctional amines, or compounds having both hydroxyl and amine functionality. The isocyanate reactive compounds also include and are not limited to polyether-polyols, polyester polyols and also low molecular weight polyols having a molecular weight between 50-20,000g/mol.

Isocyanate reactive compounds may also include diol compounds. Thus, the diol components of the polyurethane resin of present invention are generally defined by the formula wherein R is a straight chain or branched hydrocarbon group. Examples of preferred diols include polyethyleneether glycols (PEG), polypropyleneether glycols (PPG), dimethylolpropionic acid (DMPA), polytetramethylene ether glycols (Poly-THF), 1,4-butanediol, 1,6-hexanediol, neopentyl glycol, or a mixture thereof. According to the present invention, the use of DMPA and Poly-THF is particularly preferred. Other diol components that may be utilized include polyester diols and polycaprolactone diols.

Optionally, a further isocyanate-reactive component with at least one diamine can be added. The diamine can be any aliphatic, cycloaliphatic, aromatic, or heterocyclic diamine having primary or secondary amino groups. Example are ethylenediamine, 1,2-diaminopropane, 1,3-diaminopropane, diaminobutane, hexamethylenediamine, 1,4-diaminocyclohexane, 3-aminomethyl-3,5,5-trimethylcyclohexylamine (isophorone diamine), m-xylylene diamine, hydrazine, or 1,3-bis (aminomethyl) cyclohexane.

Within the reaction mixture, there must be at least one carboxylic functional diisocyanate reactive component to act as a catalyst for the isocyanate/isocyanate-reactive compound (such as polyol) reaction which during the reaction is incorporated into the final polyurethane resin. These substances are incorporated into the backbone of the polymer, and as such are not free to leach out or migrate from the polymer in sensitive end use applications. The reaction mixture can either have an excess of isocyanate which can then be further reacted with a chain extension agent (either a polyol of multifunctional amine) or an excess of isocyanate-reactive compound such as polyol which would need no chain extension.

The amount of carboxylic functional diisocyanate reactive component can be as small as 0.05 (Example 2) equivalents or a much larger amount if functionality is required in the final polyurethane resin (Example 3).

The process of the present invention is carried out in the presence of certain solvents, or these solvents are added to the polyurethane resin once the process of preparation of said resin is finished. Suitable solvents may include highly active solvents and combinations thereof depending on compatibility with the resin and end use requirements.

Such solvents include and are not limited to ketones, aromatic hydrocarbons, aliphatic hydrocarbons, esters, and alcohols, depending on the type of printing ink called for - either flexographic or gravure. It is preferred that the solvent be a combination of ester solvent and alcohol solvent.

Ester solvents include but are not limited to n-propyl acteate, ethyl acetate, butyl acetate, isopropyl acetate, propylene glycol monomethyl ether acetate and the like and combinations thereof. It is preferred that the ester solvent is ethyl acetate or propyl acetate.

Alcohol solvents include but are not limited to ethanol, propanol, ispropanol, glycol ethers, 1-ethoxy-2-propanol, propylene glycol n-propyl ether, dipropylene glycol, n-butyl ether, dipropylene glycol ethyl ether, diacetone alcohol, diethylene glycol monobutyl ether, propylene glycol methyl ether and combinations thereof. It is preferred that the alcohol solvent is n-propanol or ethanol.

A benefit of this technology is that the catalytic effect is significantly more independent of reaction scale than with conventional external catalysts. In other words, the level of isocyanate-reactive carboxylic acid functional material in laboratory scale provides the same relative reaction rate when manufactured on a commercial scale. Many conventional external catalysts show a change in reaction speed, and need to be reduced as scale is increased.

A further benefit of this technology is that, when used at higher levels in the polymer, these compounds can provide significant pendant carboxylic acid functionality, which can be used as a site for subsequent reactions or as a means to improve adhesion on difficult substrates such as polyolefin films.

In summary, the benefits of the present invention as described hereinabove over the prior art are as follows:
1) elimination of the use of conventional catalysts;
2) elimination of end use hazards of metal based catalysts;
3) elimination of the end use restrictions on odor with amine-based catalysts;
4) elimination of leachable or extractable components of the final polymer;
5) incorporation of pendant carboxylic acid functionality present on isocyanate reactive compound for subsequent reactions or as an adhesion-promoting moiety; and 6) catalytic effect independent of reaction scale.

### Example 1 - Comparative - Preparation of a polyurethane resin #1

### Step 1

A flask was charged with polytetrahydrofuran (PTHF Mw=2000; 393g), polytetrahydrofuran (PTHF Mw=1000; 196g), 1-isocyanato-5-isocyanatomethyl-3,3,5-trimethylcyclohexane (isophorone diisocyanate (IPDI; 131g)), and propyl acetate (240g). IPDI is a diisocyanate compound and PTHF is an isocyanate reactive compound that does not contain a carboxylic acid functional group. This mixture was then heated to 75°C over 1 hour under nitrogen with constant agitation. The reaction was carried out over 20 hrs at 75°C in the absence of an independent catalyst. The reaction was monitored by the process of %NCO determination. After the reaction was completed, the mixture was cooled and propyl acetate (240g) is added.

### Step 2

After cooling the above mixture to 40°C, n-propanol (300g) and ethylenediamine (11g) were added over 15 minutes. The resulting mixture was then mixed for a further 1 hour.

### Example 2 - Preparation of a polyurethane resin #2

### Step 1

A flask was charged with polytetrahydrofuran (PTHF; Mw=2000; 402g), polytetrahydrofuran (PTHF Mw=1000; 181g), dimethylolpropionic acid (DMPA; 3g), isophorone diisocyanate (IPDI; 134g), and propyl acetate (240g). Both of PTHF and DMPA are isocyanate reactive compound with only DMPA containing a carboxylic acid functional group. This mixture was heated to 75°C over 1 hour under nitrogen with constant agitation. The reaction was carried out over 5.5 hours at 75°C. The reaction mixture was monitored by the process of %NCO determination. After the reaction was completed, the mixture was then cooled and propyl acetate (240g) was added.

### Step 2

After cooling the above mixture to 40°C, n-propanol (300g) and ethylenediamine (12g) were added over 15 minutes. The resulting mixture was then mixed for a further 1 hour.

The polyurethane resins derived from Example 1 and Example 2 were very similar in viscosity, percent solids, and molecular weight.

### Example 3 - Preparation of a polyurethane resin #3

A flask was charged with polypropyleneether glycols (PPG Mw=2000; 354g), polypropyleneether glycols (PPG Mw=1000; 171g) dimethylolpropionic acid (DMPA; 23g) and isophorone diisocyanate (IPDI; 173g). Both of PPG and DMPA are isocyanate reactive compounds with only DMPA having a carboxylic acid functional group. This mixture was heated to 80°C over 1 hour under nitrogen with constant agitation. The reaction was carried out over 6 hrs at 80°C and monitored by the process of %NCO determination. After the reaction was completed, the mixture was then cooled and ethyl acetate (195g) is added. Ethanol (656g) and IPDA (12.3g) (premixed) were added to the mixture over a 10 minute period and mixed for a further 1 hour.

### Example 4 - Preparation of a polyurethaneresin #4 in the presence of organotin catalyst

### Step 1

A four necked flask is charged with PTHF 2000 (393g), PTHF 1000 (196g), IPDI (131g) and dibutyltin dilaurate (prior art catalyst; 0.5g of a 1% solution) in propyl acetate (240 g). This mixture is then heated to 75°C over 1 hour under nitrogen with constant agitation. The reaction is carried out over 6 hrs at this temperature. The reaction mixture is monitored by %NCO determination. After the reaction is completed, the mixture is cooled and propyl acetate (240g) is added.

### Step 2

After the flask has been cooled to 40°C a mixture of n-propanol (300g) and ethylenediamine (11g) is added over 15 minutes. The reaction mixture is then allowed to mix for a further 1 hour. After the reaction was over, the dibutyltin dilaurate catalyst was nor removed from the polyurethane resin final product

Table 1 below compares the reaction time for the preparation of the polyurethane resins of Examples 1-4. The use of DMPA as an isocyanate reactive compound containing a carboxylic functional group significantly shortened the reaction time when compared with polyurethane resins prepared in the absence of a catalyst. In fact, the reaction time when DMPA was used is similar to the reaction time when dibutyltin dilaurate was used as an external catalyst in the preparation of polyurethane resins.

**Table 1**

| | Example 1 | Example 2 | Example 3 | Example 4 |
|---|---|---|---|---|
| Catalyst used | NONE | 3 g DMPA | 23 g DMPA | 0.5g of a 1% solution of dibutyltin dilaurate in propyl acetate |
| Prepolymer reaction time, hours | 20 | 5.5 | 6.0 | 6.0 |

The invention has been described in terms of preferred embodiments thereof, as will be understood by those skilled in the art.

## Claims

1. A method of preparing an organic solvent based polyurethane resin comprising
reacting at least one diisocyanate compound with at least two isocyanate reactive compounds by mixing the at least one diisocyanate compound with the at least two isocyanate reactive compounds wherein:
(a) at least one of said isocyanate reactive compounds comprises at least one isocyanate reactive group and a carboxylic acid functional group, wherein the at least one isocyanate reactive compound that comprises at least one isocyanate reactive group and a carboxylic acid functional group acts as a catalyst for the reaction;
(b) said reaction is carried out in the absence of an independent catalyst and
(c) said reaction is carried out in the presence of one or more organic solvents or one or more organic solvents are added to the organic solvent based polyurethane resin once said reaction is finished.

2. The method of claim 1, wherein said diisocyanate compound is an aliphatic diisocyanate compound.

3. The method of claim 2, wherein said aliphatic diisocyanate is selected from the group consisting of: 1,4-diisocyanatobutane, 1,6-diisocyanatohexane, 1,5-diisocyanato-2,2-dimethylpentane, 4-trimethyl-1,6-diisocyanatohexane, 1,10-diisocyanatodecane, 1,3- and 1,4-diisocyanatocyclo-hexane,1-isocyanato-5-isocyanatomethyl-3,3,5-trimethylcyclohexane, 2,3-diisocyanato-1- methylcyclohexane, 2,4-diisocyanato-1-methylcyclohexane, 2,6-diisocyanato-1-methylcyclohexane, 4,4'-diisocyanatodicyclohexylmethane, 2,4'-diisocyanatodicyclohexylmethane,1-isocyanato-3-(4)-isocyanatomethyl-1-methyl-cyclohexane, 4,4'-diisocyanatodiphenylmethane, 2,4'-diisocyanatodiphenylmethane, 2,2,4-trimethyldiisocyanatohexane and 2,4,4-trimethyldiisocyanatohexane.

4. The method of claim 1, wherein said diisocyanate compound is an aromatic diisocyanate compound.

5. The method of claim 4, wherein said aromatic diisocyanate 1,1'-methylenebis[4-isocyanato-benzene (MDI), 1,6-diisocyanato-hexane (HDI), and 1,3-diisocyanatomethyl-benzene (TDI).

6. The method of claim 1, wherein the (a) isocyanate reactive compound is selected from the group consisting of monofunctional alcohol, difunctional alcohol, multifunctional alcohol, monofunctional amine, difunctional amine and multifunctional amine.

7. The method of claim 1, wherein the (a) isocyanate reactive compound is selected from the group consisting of polyether-polyols, polycaprolactone polyols and polyester polyols .

8. The method of claim 1, wherein the (a) isocyanate reactive compound is a polyol having a molecular weight between about 50 to 20,000g/mol.

9. The method of claim 1, wherein the (a) isocyanate reactive compound is a diol selected from the group consisting of: polyethyleneether glycols (PEG), polypropyleneether glycols (PPG), dimethylolpropionic acid (DMPA), polycaprolactone glycols, polytetramethylene ether glycols (Poly-THF), 1,4-butanediol, 1,6-hexanediol, neopentyl glycol, and a mixture thereof.

10. The method of claim 1, wherein the (a) isocyanate reactive compound comprises at least two hydroxyl functional groups and at least one carboxylic acid functional group.

11. The method of claim 10, wherein said isocyanate reactive compound is dimethylolpropionic acid (DMPA).

12. The method of claim 1, wherein the product of said reaction is further reacted with a diamine compound.

13. The method of claim 12, wherein said diamine compound is ethylenediamine.

14. A polyurethane resin prepared according to the method of claim 1.

## Patentansprüche

1. Verfahren zum Herstellen eines auf organischem Lösungsmittel basierenden Polyurethanharzes,
das Folgendes aufweist:
Umsetzen von zumindest einer Diisocyanatverbindung mit mindestens zwei gegenüber Isocyanat reaktiven Verbindungen durch Mischen der zumindest einen Diisocyanatverbindung mit dem zumindest zwei gegenüber Isocyanat reaktiven Verbindungen, wobei
(a) zumindest eine der gegenüber Isocyanat reaktiven Verbindungen zumindest eine gegenüber Isocyanat reaktive Gruppe und eine funktionelle Carboxylgruppe aufweist, wobei die zumindest eine gegenüber Isocyanat reaktive Verbindung, die zumindest eine gegenüber Isocyanat reaktive Gruppe und eine funktionelle Carboxylgruppe aufweist, als Katalysator für die Reaktion wirkt;
(b) die Reaktion ohne einen unabhängigen Katalysator durchgeführt wird; und
(c) die Reaktion in Gegenwart von einem oder mehreren organischen Lösungsmitteln erfolgt oder ein oder mehrere organische Lösungsmittel dem auf organischem Lösungsmittel basierenden Polyurethanharz zugesetzt wird, nachdem die Reaktion beendet ist.

2. Verfahren nach Anspruch 1,
wobei die Diisocyanatverbindung eine aliphatische Diisocyanatverbindung ist.

3. Verfahren nach Anspruch 2,
wobei das aliphatische Diisocyanat aus der Gruppe ausgewählt ist, bestehend aus: 1,4-Diisocyanatbutan, 1,6-Diisocyanathexan, 1,5-Diisocyanat-2,2-dimethylpentan, 4-Trimethyl-1,6-diisocyanathexan, 1,10-Diisocyanatdecan, 1,3- und 1,4-Diisocyanatcyclohexan, 1-Isocyanat-5-isocyanatmethyl-3,3,5-trimethylcyclohexan, 2,3-Diisocyanat-1-methylcyclohexan, 2,4-Diisocyanat-1-methylcyclohexan, 2,6-Diisocyanat-1-methylcyclohexan, 4,4'-Diisocyanatdicyclohexylmethan, 2,4'-Diisocyanatdicyclohexylmethan, 1-Isocyanat-3-(4)-isocyanatmethyl-1-methylcyclohexan, 4,4'-Diisocyanatdiphenylmethan, 2,4'-Diisocyanatdiphenylmethan, 2,2,4-Trimethyldiisocyanathexan und 2,4,4-Trimethyldiisocyanathexan.

4. Verfahren nach Anspruch 1,
wobei die Diisocyanatverbindung eine aromatische Diisocyanatverbindung ist.

5. Verfahren nach Anspruch 4,
wobei das aromatische Diisocyanat 1,1'-Methylenbis[4-isocyanatbenzol (MDI), 1,6-Diisocyanathexan (HDI) und 1,3-Diisocyanatmethylbenzol (TDI) ist.

6. Verfahren nach Anspruch 1,
wobei die gegenüber Isocyanat reaktive Verbindung (a) aus der Gruppe ausgewählt ist, die aus monofunktionellem Alkohol, difunktionellem Alkohol, polyfunktionellem Alkohol, monofunktionellem Amin, difunktionellem Amin und polyfunktionellem Amin ausgewählt ist.

7. Verfahren nach Anspruch 1,
wobei die gegenüber Isocyanat reaktive Verbindung (a) aus der Gruppe ausgewählt ist, die aus Polyetherpolyolen, Polycaprolactonpolyolen und Polyesterpolyolen besteht.

8. Verfahren nach Anspruch 1,
wobei die gegenüber Isocyanat reaktive Verbindung (a) ein Polyol mit einem Molekulargewicht von etwa 50 bis 20000 g/Mol ist.

9. Verfahren nach Anspruch 1,
wobei die gegenüber Isocyanat reaktive Verbindung (a) ein Diol ist, das aus der Gruppe ausgewählt ist, bestehend aus: Polyethylenetherglycolen (PEG), Polypropylenetherglycolen (PPG), Dimethylolpropionsäure (DMPA), Polycaprolactonglycolen, Polytetramethylenetherglycolen (Poly-THF), 1,4-Butandiol, 1,6-Hexandiol, Neopentylglycol und einem Gemisch davon.

10. Verfahren nach Anspruch 1,
wobei die gegenüber Isocyanat reaktive Verbindung (a) zumindest zwei funktionelle Hydroxylgruppen und zumindest eine funktionelle Carboxylgruppe aufweist.

11. Verfahren nach Anspruch 10,
wobei die gegenüber Isocyanat reaktive Verbindung Dimethylolpropionsäure (DMPA) ist.

12. Verfahren nach Anspruch 1,
wobei das Produkt dieser Reaktion ferner mit einer Diaminverbindung umgesetzt wird.

13. Verfahren nach Anspruch 12,
wobei die Diaminverbindung Ethylendiamin ist.

14. Polyurethanharz,
das nach dem Verfahren nach Anspruch 1 hergestellt ist.

## Revendications

1. Procédé de préparation d'une résine de polyuréthane à base d'un solvant organique, comprenant
la réaction d'au moins un composé de diisocyanate avec au moins deux composés réagissant avec un isocyanate, en mélangeant le au moins un composé de diisocyanate avec les au moins deux composés réagissant avec un isocyanate, dans lequel :
(a) au moins un desdits composés réagissant avec un isocyanate comprend au moins un groupe réagissant avec un isocyanate et un groupe fonctionnel acide carboxylique, dans lequel le au moins un composé réagissant avec un isocyanate qui comprend au moins un groupe réagissant avec un isocyanate et un groupe fonctionnel acide carboxylique joue le rôle de catalyseur pour la réaction ;
(b) ladite réaction est menée en l'absence d'un catalyseur indépendant, et
(c) ladite réaction est menée en présence d'un ou de plusieurs solvants organiques ou un ou plusieurs solvants organiques sont ajoutés à la résine de polyuréthane à base d'un solvant organique dès que ladite réaction est finie.

2. Procédé selon la revendication 1, dans lequel ledit composé de diisocyanate est un composé de diisocyanate aliphatique.

3. Procédé selon la revendication 2, dans lequel ledit diisocyanate aliphatique est choisi dans le groupe constitué par : le 1,4-diisocyanatobutane, le 1,6-diisocyanatohexane, le 1,5-diisocyanato-2,2-di-méthylpentane, le 4-triméthyl-1,6-diisocyanatohexane, le 1,10-diisocyanatodécane, le 1,3- et 1,4-diisocyanatocyclo-hexane, le 1-isocyanato-5-isocyanato-méthyl-3,3,5-triméthylcyclohexane, le 2,3-diisocyanato-1-méthylcyclohexane, le 2,4-diisocyanato-1-méthyl-cyclohexane, le 2,6-diisocyanato-1-méthylcyclohexane, le 4,4'-diisocyanatodicyclohexylméthane, le 2,4'-diisocyanatodicyclohexylméthane, le 1-isocyanato-3-(4)-isocyanatométhyl-1-méthyl-cyclohexane, le 4,4'-di-isocyanatodiphénylméthane, le 2,4'-diisocyanatodi-phénylméthane, le 2,2,4-triméthyldiisocyanatohexane et le 2,4,4-triméthyldiisocyanatohexane.

4. Procédé selon la revendication 1, dans lequel le composé de diisocyanate est un composé de diisocyanate aromatique.

5. Procédé selon la revendication 4, dans lequel ledit diisocyanate aromatique est le 1,1'-méthylènebis [4-isocyanato-benzène (MDI), le 1,6-diisocyanato-hexane (HDI) et le 1,3-diisocyanatométhyl-benzène (TDI).

6. Procédé selon la revendication 1, dans lequel le composé (a) réagissant avec un isocyanate est choisi dans le groupe constitué par un alcool monofonctionnel, un alcool difonctionnel, un alcool multifonctionnel, une amine monofonctionnelle, une amine difonctionnelle et une amine multifonctionnelle.

7. Procédé selon la revendication 1, dans lequel le composé (a) réagissant avec un isocyanate est choisi dans le groupe constitué par les polyéther-polyols, les polycaprolactone polyols et les polyester-polyols.

8. Procédé selon la revendication 1, dans lequel le composé (a) réagissant avec un isocyanate est un polyol ayant un poids moléculaire entre environ 50 et 20 000 g/mol.

9. Procédé selon la revendication 1, dans lequel le composé (a) réagissant avec un isocyanate est un diol choisi dans le groupe constitué par : les polyéthylène éther glycols (PEG), les polypropylène éther glycols (PPG), l'acide diméthylolpropionique (DMPA), les polycaprolactone glycols, les polytétraméthylène éther glycols (Poly-THF), le 1,4-butanediol, le 1,6-hexanediol, le néopentyl glycol et leurs mélanges.

10. Procédé selon la revendication 1, dans lequel le composé (a) réagissant avec un isocyanate comprend au moins deux groupes fonctionnels hydroxyle et au moins un groupe fonctionnel acide carboxylique.

11. Procédé selon la revendication 10, dans lequel ledit composé réagissant avec un isocyanate est l'acide diméthylolpropionique (DMPA).

12. Procédé selon la revendication 1, dans lequel le produit de ladite réaction est en outre mis à réagir avec un composé de diamine.

13. Procédé selon la revendication 12, dans lequel ledit composé de diamine est l'éthylènediamine.

14. Résine de polyuréthane préparée selon le procédé de la revendication 1.
